# EUROPÄISCHE PATENTANMELDUNG

(11) **EP 1 391 334 A1**
(43) Veröffentlichungstag der Anmeldung: **25.02.2004**
(21) Anmeldenummer: 03017993.1
(22) Anmeldetag: 07.08.2003
(51) Int. Cl.: B60J 1/14, B60P 3/32, E06B 3/38

(54) **Fahrzeugwand mit schwenkbarem Fenster**

(30) Priorität: 14.08.2002 DE 20212513 U
(71) Anmelder: REMIS Gesellschaft für Entwicklung und Vertrieb von technischen Elementen mbH Köln, 50829 Köln (DE)
(72) Erfinder: Isfort, Paul, 50829 Köln (DE)
(74) Vertreter: Selting, Günther, Dipl.-Ing.

(57) **Zusammenfassung**

Eine Fahrzeugwand (10) mit einem schwenkbaren Fenster (12) weist ein Wandstück (14) mit einer durch einen Öffnungsrand (24) begrenzten Fensteröffnung, einen an dem Öffnungsrand (24) befestigten Fensterrahmen (22) und eine transparente Fensterscheibe (56,58) auf, die zum Öffnen und Schließen schwenkbar mit dem Wandstück (14) verbunden ist. Der Öffnungsrand (24) weist über den gesamten Öffnungsrand-Umfang eine umlaufende Stufe (26) auf. Der Fensterrahmen (22,24) weist eine über den gesamten Rahmenaußenumfang umlaufende Stufe (27) auf, die komplementär zu der Öffnungsrand-Stufe (26) ausgebildet ist. Die Öffnungsrand-Stufe (26) verleiht dem Fensterrahmen (22) eine hohe Festigkeit, so dass der Fensterrahmen (22) mit einer relativ geringen Steifigkeit auskommt.

## Beschreibung

Die Erfindung bezieht sich auf eine Fahrzeugwand mit einem schwenkbaren Fenster.

Fahrzeugwände mit schwenkbaren Fenstern sind an Campingfahrzeugen zu finden, beispielsweise an Wohnwagen und Wohnmobilen. Die Fahrzeugwände von Campingmobilen sind massiv und in der Regel eben ausgebildet. Der Einbau eines schwenkbaren Fensters erfolgt durch Ausschneiden einer Fensteröffnung, Einsetzen eines Fensterrahmens in die Fensteröffnung und Befestigung der Fensterscheibe an dem Fensterrahmen oder dem betreffenden Wandstück. Die einfachste Ausführung einer Fahrzeugwand mit Fenstern ist ein als Gummidichtung ausgebildeter Fensterrahmen, wobei die Fensterscheibe direkt an dem Wandstück befestigt wird. Die Fensterscheibe liegt mit ihrem Scheibenrand außen auf dem Öffnungsrand des Wandstückes auf, d.h. sie ragt aus der Wandebene hervor. Hierdurch ergeben sich bei höheren Geschwindigkeiten Dichtigkeitsprobleme. Ferner weisen derartige Konstruktionen einen hohen Luftwiderstand auf und bilden kein elegantes Erscheinungsbild. Es sind daher Fensterrahmen entwickelt worden, die die Fensterscheibe annähernd wandbündig aufnehmen. Da derartige Fensterrahmen die mitunter großflächige und schwere Fensterscheibe halten müssen, müssen diese Fensterrahmen selbsttragend sein und eine entsprechende Steifigkeit und Festigkeit aufweisen. Deshalb werden beispielsweise Metall-Fensterrahmen verwendet, die aufwändig in der Herstellung sind, bei denen der Eckenradius nicht beliebig klein gestaltet werden kann und die zur Vermeidung von Kondensation eine thermischen Trennung zwischen der Außen- und der Innenseite benötigen. Selbsttragende Kunststoffrahmen sind wegen der geringeren Materialstabilität sehr massiv ausgelegt und daher aufwändig in der Herstellung.

Aufgabe der Erfindung ist es, eine Fahrzeugwand mit einem schwenkbaren Fenster mit einem einfachen Fensterrahmen zu schaffen.

Diese Aufgabe wird erfindungsgemäß mit den Merkmalen des Anspruchs 1 gelöst.

Bei der erfindungsgemäßen Fahrzeugwand weist der Öffnungsrand eine über den gesamten Öffnungsrand-Umfang umlaufende Stufe auf. Ferner weist der Fensterrahmen eine über den gesamten Rahmenumfang umlaufende Stufe auf, die komplementär zu der Öffnungsrand-Stufe ausgebildet ist. Der Öffnungsrand ist also nicht glattflächig ausgeschnitten, sondern ist durch ein entsprechendes Fräswerkzeug mit einer umlaufenden Stufe versehen. Der eingesetzte Fensterrahmen ist entsprechend stufig ausgebildet und angepasst. Die Öffnungsrand-Stufe wird von dem massiven Wandmaterial gebildet und greift radial nach innen in den Fensterrahmen hinein. Die massive Öffnungsrand-Stufe verleiht dem Fensterrahmen auf diese Weise eine sehr hohe Festigkeit, so dass der Fensterrahmen mit einer relativ geringen Steifigkeit auskommt. Die Steifigkeit des Fensterrahmens wird also durch die in den Fensterrahmen hineinragende Öffnungsrand-Stufe realisiert. Dies hat den Vorteil, dass der Fensterrahmen einfach, leicht und kompakt aufgebaut ist. Die Herstellungskosten sind erheblich reduziert. Durch die wandseitige Öffnungsrand-Stufe ist die geschlossene Fensterscheibe jedenfalls teilweise in die Wandebene eingelassen. Durch die stabilisierende Öffnungsrand-Stufe kann der Fensterrahmen bei ausreichender Festigkeit kompakt ausgebildet sein, so dass er sowohl von der Fahrzeugaußenseite als auch von der Fahrzeuginnenseite aus einen sehr schmalen Rand aufweist und kein massives Erscheinungsbild bietet.

Vorzugsweise ist ein Fensterscharnier zur schwenkbaren Befestigung der Fensterscheibe an der Öffnungsrand-Stufe befestigt. Das Fensterscharnier ist also direkt mit entsprechenden Befestigungsmitteln, beispielsweise mit Schrauben, mit der massiven Öffnungsrand-Stufe verbunden. Die mitunter schwere Fensterscheibe wird also direkt von dem Wandstück gehalten und nicht von dem Fensterrahmen gehalten. Dies schließt jedoch nicht aus, dass das Scharnier-Befestigungsmittel durch den Fensterrahmen hindurchgesteckt ist.

Durch die stabilisierende Wirkung der aus einem massiven Wandmaterial bestehenden Öffnungsrand-Stufe kann der Fensterrahmen gemäß einer bevorzugten Ausgestaltung auch aus einem einstückigen Kunststoffteil bestehen. Wegen der relativ geringen Stabilitätsanforderungen kann das Kunststoffteil ferner hinterschneidungsfrei ausgebildet werden, wodurch die Herstellung vereinfacht ist und die Herstellungskosten des Kunststoffrahmens erheblich gesenkt werden.

Gemäß einer bevorzugten Ausgestaltung ist die umlaufende Stufe des Öffnungsrandes bzw. des Fensterrahmens im Wesentlichen rechtwinklig ausgebildet, mit einem in einer Wandebene liegenden Stufenboden und senkrecht dazu liegenden Stufenseitenwänden. Vorzugsweise ist der Stufenboden des Fensterrahmens durch eine Rippenstruktur versteift. Hierdurch weist auch der Fensterrahmen eine Eigensteifigkeit aus, die zusammen mit der Stabilität und Steifigkeit der Öffnungsrand-Stufe einen sehr stabilen Rahmen für die Fensterscheibe bildet. Die Rippenstruktur kann rautenförmig, wabenförmig oder anders strukturiert ausgebildet sein.

Gemäß einer bevorzugten Ausgestaltung ist der Scheibenrand der Fensterscheibe in die durch die Stufe gebildete Ausnehmung bei geschlossener Fensterscheibe eingetaucht, so dass die geschlossene Fensterscheibe fahrzeugaußenseitig nicht aus der Wandebene herausragt. Hierdurch wird bei hohen Fahrtgeschwindigkeiten ein Eindringen von Regenwasser vermieden, wird der Luftwiderstand geringgehalten und ein elegantes Erscheinungsbild mit einem schmalen sichtbaren Fensterrahmen realisiert.

Gemäß einer bevorzugten Ausgestaltung weist der Fensterrahmen fahrzeugaußenseitig eine umlaufende Abschlussrippe auf, die die äußere Randkante des Öffnungsrandes abdeckt. Die Breite der Abschlussrippe ist gering, nämlich vorzugsweise kleiner als ein Drittel der Stufenbreite bzw. von einer Breite von weniger als 15 mm. Die Abschlusslippe hat also eine geringe Breite, so dass der Fensterrahmen von der Außenseite aus optisch zierlich und nicht massiv in Erscheinung tritt.

Vorzugsweise ist die Stufe zur Fahrzeugaußenseite hin orientiert, so dass der fahrzeuginnenseitige Öffnungsausschnitt kleiner als der fahrzeugaußenseitige Öffnungsausschnitt ist. Die Fensterscheibe kann also nur zur Außenseite hin geöffnet werden.

Gemäß einer bevorzugten Ausgestaltung ist in einer Stufenseitenwand eine umlaufende Klebenut zum Verkleben der einander gegenüberliegenden Stufenseitenwände miteinander vorgesehen. Die Klebenut nimmt beim Einsetzen und Befestigen des Fensterrahmens in die Fensteröffnung ein Klebemittel zum Verkleben des Fensterrahmens mit dem Öffnungsrand auf.

Vorzugsweise weist der Fensterrahmen eine umlaufende Dichtungsnut auf, in die ein Dichtungselement eingesetzt ist. Das Dichtungselement kann als elastische Dichtungslippe u.ä. ausgebildet sein.

Gemäß eines nebengeordneten Anspruches weist ein Fensterrahmen für eine Fahrzeugwand mit schwenkbarem Fenster und mit einem Öffnungsrand, der über seinen gesamten Innenumfang eine umlaufende Stufe aufweist, eine über den gesamten Außenumfang umlaufende Stufe auf, die komplementär zu der Öffnungsrand-Stufe ausgebildet ist, so dass der Fensterrahmen in den Öffnungsrand einsetzbar ist.

Gemäß eines weiteren nebengeordneten Anspruches ist ein Fräswerkzeug zur Herstellung der Öffnungsrand-Stufe gemäß Anspruch 1 vorgesehen, das von einem entsprechend abgestuften Rotationsfräskörper gebildet wird. Mit dem Fräswerkzeug lässt sich auf einfache Weise am Innenumfang eines Öffnungsrandes die umlaufende Stufe herstellen, in die schließlich der entsprechend gestufte Fensterrahmen eingesetzt werden kann.

Im folgenden wird unter Bezugnahme auf die Zeichnungen ein Ausführungsbeispiel näher erläutert.

Es zeigen:
- Fig. 1: einen ersten Ausschnitt einer Fahrzeugwand mit schwenkbarem Fenster im Querschnitt,
- Fig. 2: einen zweiten Ausschnitt einer Fensterwand einschließlich Fenster und Scharnier im Querschnitt, und
- Fig. 3: ein Fräswerkzeug zur Herstellung einer ÖffnungsrandStufe in der Fährzeugwand der Figuren 1 und 2.

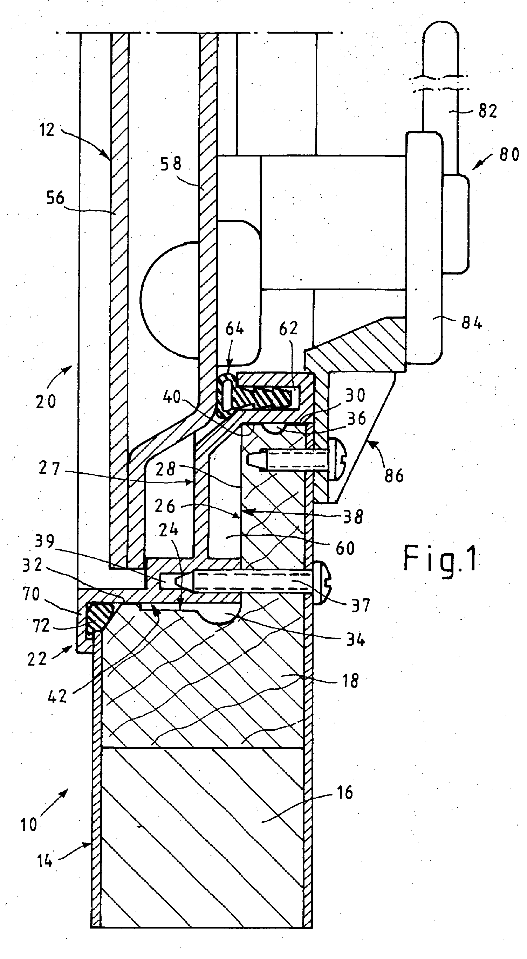

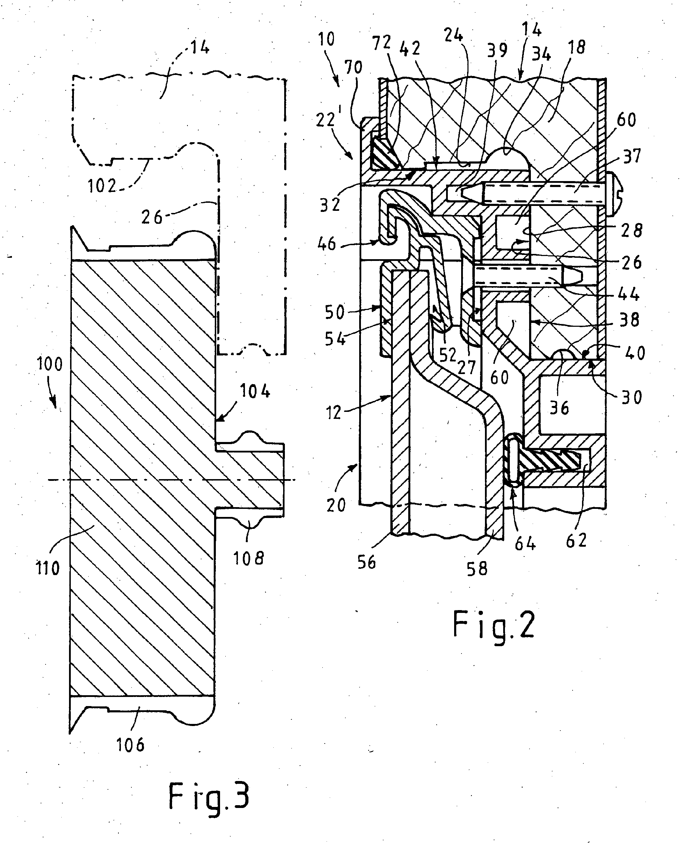

In den Figuren 1 und 2 ist jeweils ein Ausschnitt einer Fahrzeugwand 10 eines Campingfahrzeuges dargestellt, d.h. eines Campingwagens oder Campingmobiles. Die dargestellte Fahrzeugwand 10 weist ein schwenkbares transparentes Fenster 12 auf. Die Fahrzeugwand 10 wird von einem massiven Wandstück 14 gebildet. Das Wandstück 14 wird über den größten Teil seiner Fläche von einem massiven Kunststoff-Wandstück 16 und im Bereich des Fensters 12 von einem Holzwandstück 18 gebildet. In das Wandstück 14 ist eine Fensteröffnung 20 eingelassen, die durch einen Öffnungsrand 24 begrenzt ist. An dem wandstückseitigen Öffnungsrand 24 ist ein Fensterrahmen 22,22' befestigt, der den Öffnungsrand 24 über den gesamten Umfang einfasst und eine in Fig. 1 dargestellte Ausbildung der oberen Rahmenseite mit einem Fensterscharnier und eine zweite in Fig. 1 dargestellte Ausbildung ohne Scharnier an den drei übrigen Rahmenseiten aufweist.

Der Öffnungsrand 24 weist über den gesamten Öffnungsrand-Umfang eine umlaufende Stufe 26 auf. Die Öffnungsrand-Stufe 26 ist rechtwinklig ausgebildet, wobei der Stufenboden 28 in der Wandebene liegt. Die an den Stufenboden 28 angrenzenden beiden Stufenseitenwände 30,32 stehen ungefähr senkrecht zu dem Stufenboden 28.

In die beiden Stufenseitenwände 30,32 der Öffnungsrand-Stufe 26 ist ferner jeweils eine über den gesamten Umfang umlaufende Klebenut 34,36 eingelassen.

In den stufenförmigen Öffnungsrand 24 ist der Fensterrahmen 22 eingesetzt und mit dem Wandstück 14 durch Schrauben 37 und durch Verkleben verbunden. Die Befestigungsschraube 37 ist in entsprechende Befestigungsbohrungen 39 des Fensterrahmens 22,22' eingeschraubt.

Der Fensterrahmen 22,22' besteht, im Querschnitt betrachtet, im Wesentlichen aus drei Abschnitten, die den beiden Stufenseitenwänden 30,32 und dem Stufenboden 28 des Öffnungsrandes 24 jeweils gegenüberliegen und komplementär zu diesen ausgebildet sind. Der Fensterrahmen 22,22' weist ebenfalls einen Stufenboden 38 und zwei Fensterrahmen-Seitenwände 40,42 auf.

Der Fensterrahmen 22,22' ist ebenso wie die Fensteröffnung 20 rechteckig ausgebildet. Der an dem oberen Öffnungsrand vorgesehene Abschnitt des Fensterrahmens 22' ist verschieden von den übrigen drei Abschnitten des Fensterrahmens 22, die die übrigen drei Seiten der Fensteröffnung 20 einfassen.

Der. obere Abschnitt des Fensterrahmens 22' weist über seine gesamte Länge ein Scharnier 46 auf, durch das das Fenster 12 mit seinem oberen Rand gelenkig und nach außen oben schwenkbar an dem betreffenden Wandstück 14 befestigt ist. Das Scharnier 46 wird von einem wandseitigen Scharnierteil 48 und einem fensterseitigen Scharnierteil 50, das in das wandseitige Scharnierteil 48 nach außen schwenkbar eingehängt ist, gebildet. Beide Scharnierteile 48,50 sind als langgestreckte und sich über annähernd die gesamte Fensterlänge erstreckende Metall-Profile ausgebildet. Das fensterseitige Scharnierteil 50 weist fensterseitig eine Einstecknut 52 auf, in die der Randbereich 54 des Fensters 12 unlösbar eingesteckt ist.

Das Fenster 12 wird von zwei transparenten Fensterscheiben 56,58 gebildet, die in ihren Randbereichen 54 miteinander verschweißt oder verklebt sind.

Zur Versteifung des Rahmens ist der Stufenboden 38 des Fensterrahmens 22,22' durch eine Rippenstruktur 60 bildende Rippen versteift, die in Draufsicht wabenförmig ausgebildet ist. Durch die Rippenstruktur 60 wird der Stufenboden 38 derart versteift, dass er über einen langen Zeitraum und bei hohen mechanischen und thermischen Beanspruchungen spaltfrei und unverformt an dem Stufenboden 28 des Öffnungsrandes 24 anliegt.

Über den gesamten Öffnungsumfang weist der Fensterrahmen 22,22' eine Dichtungsnut 62 auf, in die ein Dichtungselement 64 eingesteckt ist. Das Dichtungselement ist an die Öffnungsrand-Stufe 26 angrenzend angeordnet und dichtet die innenliegende Fensterscheibe 58 zu dem Rahmen 22,22' ab.

An der Außenseite weist der Fensterrahmen 22,22' als Abschluss eine Abschlusslippe 70 auf, die die fahrzeugaußenseitige Randkante des Wandstückes 14 verblendet. Im Bereich dieser Wandkante ist über den gesamten Umfang ein Dichtungselement 72 angeordnet.

Wie in Fig. 1 dargestellt, ist am unteren Fensterrand ein Verriegelungselement 80 vorgesehen, das im Wesentlichen aus einem drehbaren Handgriff 82 und einem mit dem Handgriff 82 verbundenen Verriegelungsteil 84 besteht, das in der Verriegelungsposition ein Halteteil 86 hintergreift, das seinerseits fahrzeuginnenseitig im Bereich der Stufe an das Holzwandstück 18 angeschraubt ist.

Der Kunststofffensterrahmen 22,22' wird einstückig im Spritzgussverfahren hergestellt. Durch Einsetzen bzw. Weglassen entsprechender Gliederwerkzeuge kann die Spritzgussform auf beliebige Größen vergrößert bzw. verkleinert werden. Durch die Verwendung von Kunststoff für den Fensterrahmen 22,22' wird eine gute thermische Isolation zwischen der Fahrzeugaußenseite und der Fahrzeuginnenseite realisiert, so dass keine Feuchtigkeitskondensation auftreten kann.

In Fig. 3 ist ein Fräswerkzeug 100 zur Erzeugung der Öffnungsrand-Kontur 102 dargestellt. Das Fräswerkzeug 100 ist rotationssymmetrisch und weist eine Radialstufe 104 auf. Die Schneiden 106,108 des Fräswerkzeuges 100 sind entsprechend der Stufenseitenwände 30,32 konturiert.

Bei der Herstellung wird in die Fahrzeugwand 10 zunächst eine Öffnung gesägt, die kleiner ist als die spätere kleinste lichte Öffnung. Anschließend wird durch das Fräswerkzeug die gewünschte Kontur 102 über den gesamten Öffnungsrand-Umfang eingefräst. Anschließend wird das Dichtelement 72 an das Wandstück 14 angeklebt und Flüssigkleber an die Klebenuten 34,36 gegeben. Schließlich wird der einstückige Fensterrahmen 22,22' in die derart vorbereitete Öffnung eingesetzt und durch die Befestigungsschrauben 37 mit dem Wandstück 14 verschraubt. Schließlich wird das wandseitige Scharnierteil 48 am oberen Fensterrahmen 22' mit Befestigungsschrauben 44 befestigt. Schließlich wird das Fenster 12 mit dem fensterseitigen Scharnierteil 50 in das rahmenseitige Scharnierteil 48 eingesetzt und die Scheibe 12 in ihre Schließstellung geschwenkt.

Der Fensterrahmen ist durch den Verzicht auf selbsttragende Strukturen leicht, hinterschneidungsfrei und optisch zierlich ausgebildet. Die erforderliche Festigkeit wird durch eine von dem Wandstück gebildete über den gesamten Umfang verlaufende Stufe gewährleistet.

## Patentansprüche

1. Fahrzeugwand mit einem schwenkbaren Fenster (12), mit
einem Wandstück (14) mit einer durch einen Öffnungsrand (24) begrenzten Fensteröffnung (20),
einem an dem Öffnungsrand (24) befestigten Fensterrahmen (22, 22'), und
einer transparenten Fensterscheibe (56,58), die zum Öffnen und Schließen schwenkbar mit dem Wandstück (14) verbunden ist,
**dadurch gekennzeichnet**
**dass** der Öffnungsrand (24) eine über den gesamten Öffnungsrand-Umfang umlaufende Stufe (26) aufweist, und
**dass** der Fensterrahmen (22,22') eine über den gesamten Rahmenaußenumfang umlaufende Stufe (27) aufweist, die komplementär zu der Öffnungsrand-Stufe (26) ausgebildet ist.

2. Fahrzeugwand nach Anspruch 1, **dadurch gekennzeichnet, dass** ein Fensterscharnier (46) an einer Öffnungsrand-Stufe (26) befestigt ist.

3. Fahrzeugwand nach Anspruch 1 oder 2, **dadurch gekennzeichnet, dass** die Öffnungsrand-Stufe (26) und die rahmenseitige Stufe (27) rechtwinklig sind und jeweils einen Stufenboden (28,38) aufweisen, der in einer Wandebene liegt.

4. Fahrzeugwand nach einem der Ansprüche 1-3, **dadurch gekennzeichnet, dass** der Rahmen-Stufenboden (38) durch eine Rippenstruktur (60) versteift ist.

5. Fahrzeugwand nach einem der Ansprüche 1-4, **dadurch gekennzeichnet, dass** der Randbereich (54) der Fensterscheibe (56,58) in die durch die Stufe (26) gebildete Ausnehmung eingetaucht ist, so dass die geschlossene Fensterscheibe (56, 58) fahrzeugaußenseitig nicht aus der Wandebene herausragt.

6. Fahrzeugwand nach einem der Ansprüche 1-5, **dadurch gekennzeichnet, dass** der Fensterrahmen (22) fahrzeugaußenseitig eine umlaufende Abschlusslippe (70) aufweist, die die äußere Randkante des Öffnungsrandes abdeckt.

7. Fahrzeugwand nach Anspruch 6, **dadurch gekennzeichnet, dass** die Breite der Abschlusslippe kleiner als ein Drittel der Stufenbreite ist.

8. Fahrzeugwand nach Anspruch 6 oder 7, **dadurch gekennzeichnet, dass** die Breite der Abschlusslippe (70) geringer als 15 mm ist.

9. Fahrzeugwand nach einem der Ansprüche 1-8, **dadurch gekennzeichnet, dass** die Stufe (26) nach fahrzeugaußenseitig weist, so dass die schwenkbare Fensterscheibe (56,58) zur Fahrzeugaußenseite hin aufgeschwenkt werden kann.

10. Fahrzeugwand nach einem der Ansprüche 1-9, **dadurch gekennzeichnet, dass** der Fensterrahmen (22,22') ein einstückiges hinterschneidungsfreies Kunststoffteil ist.

11. Fahrzeugwand nach einem der Ansprüche 1-10, **dadurch gekennzeichnet, dass** das Wandstück (14) im Bereich des Öffnungsrandes (24) eine Klebenut (34) zum Verkleben des Fensterrahmens (22) mit dem Wandstück (14) aufweist.

12. Fahrzeugwand nach einem der Ansprüche 1-11, **dadurch gekennzeichnet, dass** der Fensterrahmen (22,22') eine umlaufende Dichtungsnut (62) aufweist, in die ein Dichtungselement (64) eingesteckt ist.

13. Fensterrahmen gemäß Anspruch 1, für eine Fahrzeugwand mit schwenkbarem Fenster gemäß Anspruch 1.

14. Fräswerkzeug zur Herstellung der Öffnungsrandkontur (102) mit der Öffnungsrandstufe (26) gemäß Anspruch 1, das einen Rotations-Fräskörper (110) aufweist, der eine der Öffnungsrandstufe (26) entsprechende Stufe (104) aufweist.
